(19) Europäisches Patentamt
European Patent Office
Office européen des brevets

(11)  **EP 2 869 982 B1**

(12)  **FASCICULE DE BREVET EUROPEEN**

(45) Date de publication et mention
de la délivrance du brevet:
**04.09.2019  Bulletin 2019/36**

(51) Int Cl.:
*B29C 64/153* (2017.01)    *B22F 3/105* (2006.01)
*B29C 64/386* (2017.01)    *B29C 64/393* (2017.01)
*B29C 64/135* (2017.01)    *G05B 15/02* (2006.01)
*B33Y 10/00* (2015.01)    *B33Y 30/00* (2015.01)
*B33Y 50/00* (2015.01)    *B33Y 50/02* (2015.01)

(21) Numéro de dépôt: **13745596.0**

(22) Date de dépôt: **03.07.2013**

(86) Numéro de dépôt international:
**PCT/EP2013/064037**

(87) Numéro de publication internationale:
**WO 2014/006094 (09.01.2014 Gazette 2014/02)**

(54) **PROCEDE ET APPAREIL DE PILOTAGE DE FAISCEAU LASER POUR LA FABRICATION D'OBJETS TRIDIMENSIONNELS PAR COUCHES SUPERPOSEES**

VERFAHREN UND VORRICHTUNG ZUR STEUERUNG EINES LASERSTRAHLS ZUR HERSTELLUNG DREIDIMENSIONALER OBJEKTE MITTELS SCHICHTLAGEN

METHOD AND APPARATUS FOR CONTROLLING A LASER BEAM FOR MANUFACTURING THREE-DIMENSIONAL OBJECTS BY MEANS OF STACKED LAYERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **06.07.2012   FR 1256511**

(43) Date de publication de la demande:
**13.05.2015   Bulletin 2015/20**

(73) Titulaire: **Phenix Systems**
**63200 Riom (FR)**

(72) Inventeur: **TEULET, Patrick**
**F-63200 Riom (FR)**

(74) Mandataire: **Lavoix**
**62, rue de Bonnel**
**69448 Lyon Cedex 03 (FR)**

(56) Documents cités:
**DE-A1- 10 112 591     DE-B3-102011 105 045**
**GB-A- 2 378 150**

## Description

La présente invention concerne un procédé de pilotage de faisceau laser pour fabrication d'objets tridimensionnels par couches superposées et un dispositif de fabrication d'objets tridimensionnels par couches superposées associé.

L'invention se situe dans le domaine technique de la réalisation d'objets tridimensionnels par traitement laser, en particulier par frittage laser.

Il est connu de réaliser des objets tridimensionnels sans contrainte de forme par fabrication additive couche par couche par frittage laser. Un tel procédé de fabrication comprend le dépôt d'une couche de matériau pulvérulent ou liquide sur un substrat, qui peut être une couche précédemment solidifiée de l'objet à fabriquer. La couche de matériau pulvérulent ou liquide est solidifiée progressivement par application d'un faisceau laser, appelée également lasage, selon une zone définie par une section bidimensionnelle de l'objet à fabriquer. Ainsi, un objet tridimensionnel est fabriqué par superposition de couches, chaque couche correspondant à une section bidimensionnelle de l'objet à fabriquer.

De manière connue, le faisceau laser est mis en mouvement, en utilisant des miroirs actionnés par des moteurs galvanométriques, dits miroirs galvanométriques, selon des trajectoires rectilignes, espacées d'une distance déterminée en fonction des contraintes physiques du matériau utilisé, de manière à solidifier progressivement l'ensemble de la zone correspondant à la section bidimensionnelle à fabriquer.

Les documents GB2 378 150 A1, DE 10 112 591 A1 et DE 10 2011 105045 B3 décrivent des procédés de pilotage de faisceau laser pour fabrication d'objets tridimensionnels par couches superposées.

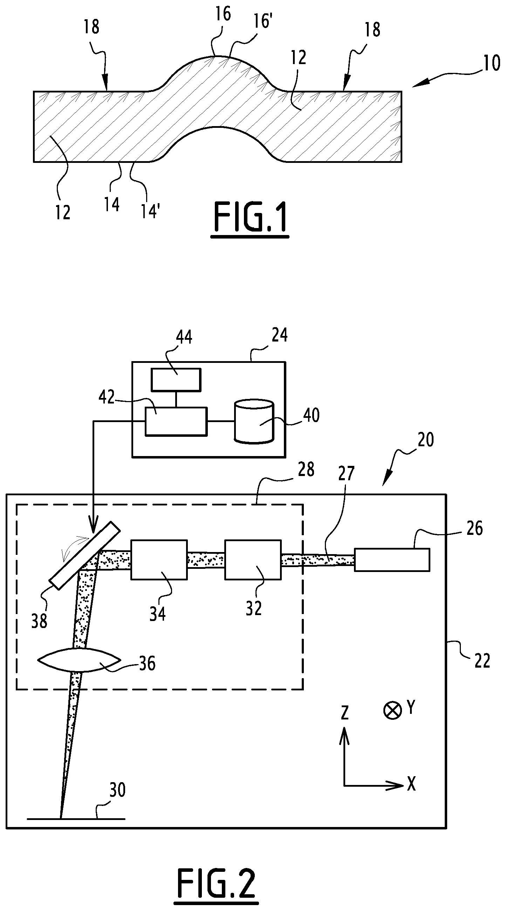

La figure 1 illustre schématiquement des trajectoires rectilignes telle qu'utilisées dans l'état de la technique, pour solidifier une couche de section bidimensionnelle 10. Les trajectoires rectilignes ou vecteurs 12 sont caractérisées par les extrémités 14, 16, définies par rapport au contour géométrique 18 de la section bidimensionnelle 10. Selon un premier procédé de fabrication connu, les trajectoires rectilignes 12 sont toutes parcourues successivement par le faisceau laser dans une direction donnée, indiquée par le sens des flèches sur la figure 1, en partant d'un point 14 de début de trajectoire vers un point 16 de fin de trajectoire. Pour passer d'une trajectoire à la suivante, il est nécessaire d'arrêter la source laser, de repositionner le ou les miroirs galvanométriques et de redémarrer la source laser ensuite. Les temps cumulés d'arrêt, de repositionnement et de reprise, ou temps de transition entre deux trajectoires, représentent une perte importante de productivité.

Pour remédier à ce problème, il a été proposé, dans l'état de la technique, d'effectuer un parcours des trajectoires rectilignes alternant les sens de parcours, de manière à diminuer la distance entre le point de fin d'une trajectoire et le point de début de la trajectoire suivante, et donc de diminuer le temps de transition. Par exemple, en référence à la figure 1, après un parcours de trajectoire rectiligne entre le point 14 et le point 16, la trajectoire rectiligne suivante est parcourue du point 16' vers le point 14'. Cette amélioration de la productivité demeure insuffisante, dans la mesure où il y a un grand nombre de trajectoires rectilignes à parcourir afin de solidifier l'ensemble de la zone 10 par l'application du faisceau laser.

De plus, le grand nombre de trajectoires induit un grand nombre de points de début et de fin de trajectoire, donc un grand nombre d'endroits où la surface lasée est marquée, ce qui produit un effet dit « de surface » et résulte en certaines imperfections de la surface lasée obtenue. Ce phénomène persiste même si le contour 18 est retracé par application du faisceau laser.

Il existe donc un besoin de remédier aux inconvénients des méthodes connues dans l'état de la technique, permettant une meilleure productivité et une amélioration de l'état des surfaces des pièces obtenues par frittage laser par couche.

A cet effet, l'invention propose un procédé de pilotage de faisceau laser pour fabrication d'objets tridimensionnels par couches superposées, comportant, pour chaque couche, une étape de solidification par faisceau laser d'une zone correspondant à une section bidimensionnelle d'un objet tridimensionnel à fabriquer, une dite section bidimensionnelle ayant un contour géométrique selon la revendication 1.

Avantageusement, la définition d'une trajectoire de référence à partir du contour géométrique de la section bidimensionnelle de l'objet à fabriquer, et la définition de l'ensemble des trajectoires à partir d'une trajectoire de référence permet une adaptation fine à la géométrie de l'objet à fabriquer. Ainsi, la qualité de la surface obtenue est améliorée. De plus, le nombre de trajectoires peut être largement diminué, ce qui permet de diminuer les temps d'arrêt et de repositionnement (temps de transition) et donc d'augmenter la productivité de fabrication.

Le procédé de pilotage de faisceau laser selon l'invention peut également présenter une ou plusieurs des caractéristiques ci-dessous :

- la détermination d'un ensemble de trajectoires comprend la génération d'une pluralité de trajectoires parallèles à la trajectoire de référence, deux trajectoires successives étant distantes d'une distance prédéterminée ;

- la détermination d'un ensemble de trajectoires comprend, pour une zone de ladite section bidimensionnelle ayant un segment de la trajectoire de référence correspondant, une sélection entre trajectoires parallèles et trajectoires orthogonales audit segment de la trajectoire de référence en fonction d'un critère prédéterminé ;

- il comprend en outre une étape de détermination de ladite stratégie de parcours, permettant de minimiser la distance entre un point de fin de parcours d'une trajectoire et un point de début de parcours d'une trajectoire suivante selon l'ordre de parcours ;

- ladite stratégie de parcours comprend également la définition d'un mode de parcours pour chaque trajectoire de l'ensemble des trajectoires, parmi un parcours dans un sens prédéterminé et une alternance entre deux sens de parcours prédéterminés.

Selon un deuxième aspect, l'invention concerne un dispositif de fabrication par couches superposées d'objets tridimensionnels, apte à appliquer, pour chaque couche à fabriquer, une solidification par faisceau laser d'une zone correspondant à une section bidimensionnelle d'un objet tridimensionnel à fabriquer, une dite section bidimensionnelle ayant un contour géométrique, comportant des moyens de déviation d'un faisceau laser, selon la revendication 6.

Selon une caractéristique, le dispositif comporte une unité de calcul apte à mettre en oeuvre les moyens d'acquisition de contour géométrique, les moyens de détermination d'une trajectoire de référence et les moyens de détermination de l'ensemble des trajectoires.

D'autres caractéristiques et avantages de l'invention ressortiront de la description qui en est donnée ci-dessous, à titre indicatif et nullement limitatif, en référence aux figures annexées, parmi lesquelles :

- la figure 1, déjà décrite, est une vue schématique d'une section bidimensionnelle à traiter par faisceau laser selon des trajectoires rectilignes, selon l'état de la technique ;
- la figure 2 est un schéma de principe d'une installation de fabrication d'objets par frittage laser par couches ;
- la figure 3 est un bloc diagramme représentant les étapes mises en oeuvre dans un procédé de pilotage de faisceau laser selon un mode de réalisation de l'invention ;
- la figure 4 est une vue de dessus d'une section bidimensionnelle d'un objet à fabriquer et de sa trajectoire de référence selon un premier mode de mise en oeuvre de l'invention ;
- la figure 5 représente schématiquement l'ensemble des trajectoires construites à partir de la trajectoire de référence selon le premier mode de réalisation de l'invention ;
- la figure 6 est une vue de dessus d'une section bidimensionnelle d'un objet à fabriquer et de l'ensemble des trajectoires selon une variante du premier mode de réalisation de l'invention, et
- la figure 7 représente schématiquement l'ensemble des trajectoires selon un deuxième mode de réalisation qui ne fait pas partie de l'invention.

L'invention sera décrite dans son application à la fabrication d'objets tridimensionnels sans contrainte de forme, par fabrication de couches superposées, chaque couche correspondant à une section bidimensionnelle de l'objet à fabriquer. Chaque couche est formée par solidification d'un matériau liquide ou pulvérulent par application d'un faisceau laser, dans le but d'obtenir une zone solide définie en fonction de la section bidimensionnelle correspondant à la couche.

La figure 2 illustre schématiquement des modules d'un dispositif de fabrication par couches superposées, mettant en oeuvre un faisceau laser, étant entendu que sont décrits uniquement les modules ayant un intérêt pour la mise en oeuvre de l'invention.

Le dispositif 20 comporte une unité de lasage 22 et une unité de calcul 24, par exemple un ordinateur. L'unité de lasage 22 comporte une source de rayonnement électromagnétique ou source laser 26 apte à fournir un faisceau laser 27, une tête galvanométrique 28 et un champ de frittage 30, qui est représenté ici en coupe transversale et sur lequel est réalisée chaque couche de l'objet à fabriquer.

L'unité de lasage 28 comporte des moyens 32 de mise en forme du faisceau laser 27, connu sous le nom de « beamshaper » ou « beamexpander », des moyens de modification de distance focale 34 et/ou une lentille de focalisation à champ plat 36. De plus, l'unité de lasage comporte des moyens 38 de déviation de faisceau laser dans un plan XY, par exemple formé par deux miroirs montés sur deux moteurs galvanométriques dont les axes sont perpendiculaires entre eux. Par souci de simplicité un seul miroir est représenté.

L'unité de calcul 24 est apte à envoyer des ordres de pilotage aux moyens 38 de déviation du faisceau, de manière à réaliser le balayage par le faisceau laser d'une trajectoire donnée sur le champ de frittage 30 qui comporte une couche de matériau liquide ou pulvérulent permettant de réaliser une couche de l'objet à fabriquer.

L'unité de calcul 24, qui est par exemple un ordinateur, comporte notamment des moyens de stockage de données 40 et un processeur 42, apte à effectuer des calculs et à exécuter des instructions de code de programme informatique, permettant de mettre en oeuvre un procédé de pilotage de faisceau laser selon l'invention. En particulier, les moyens de stockage 40 sont aptes à stocker des données relatives à la forme de chaque section bidimensionnelle de l'objet tridimensionnel à fabriquer, fournies par exemple par un logiciel de conception et fabrication assistée par ordinateur (CFAO) approprié (non représenté sur la figure). L'unité de calcul 24 comporte également des moyens d'interfaçage homme-machine 44, permettant notamment à un opérateur de fournir des paramètres utiles à la mise en oeuvre d'un procédé de pilotage de faisceau laser selon l'invention.

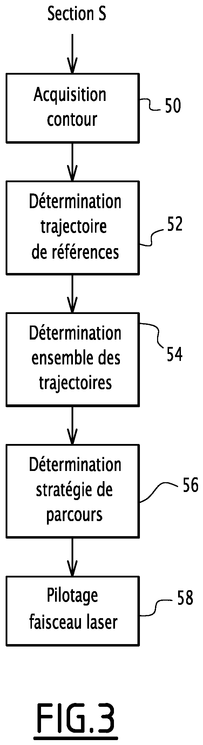

Selon un principe général, illustré à la figure 3, un procédé de pilotage de faisceau laser pour fabrication par couches superposées d'objets tridimensionnels est appliqué, pour chaque couche à fabriquer. Une section bidimensionnelle correspondant à la couche à fabriquer est fournie en entrée. Comme expliqué ci-dessus, une telle section, définissant le ou les contours de la matière à solidifier dans le champ de frittage 30, est fournie par exemple par un logiciel de CFAO pour chaque couche successive.

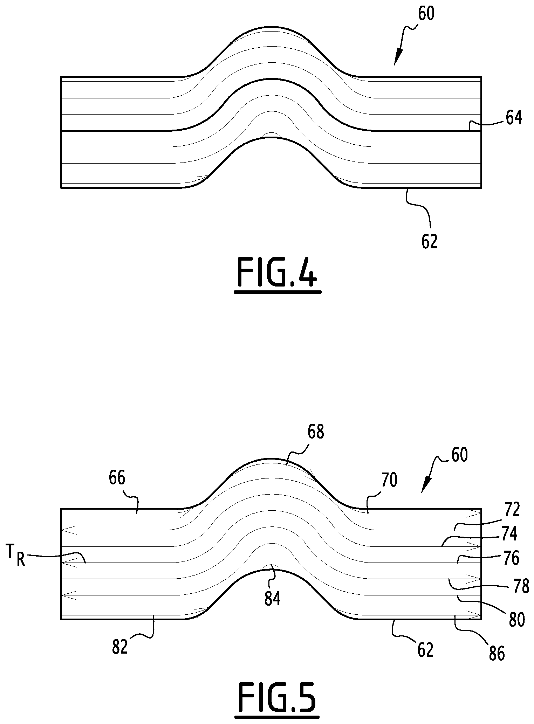

Dans une première étape 50, le contour géométrique de la section est d'abord obtenu. Lorsqu'il s'agit de la fabrication d'objets de forme quelconque, le contour géométrique a une forme géométrique quelconque, comme illustré plus loin dans les figures 4 à 7. Un tel contour peut présenter des portions linéaires ou pas, peut avoir une forme polygonale. Dans le cas où la couche à fabriquer est constituée de plusieurs portions de matière non connexes, chaque portion est traitée individuellement, avec sa section bidimensionnelle et son contour géométrique associé.

L'étape 50 est suivie d'une étape 52 de détermination d'une trajectoire de référence de la section bidimensionnelle à traiter, la trajectoire de référence calculée à partir du contour géométrique de la section. Plusieurs modes de réalisation de cette étape 52 sont envisagées, ces divers modes de réalisation étant illustrés de manière plus détaillée ci-après en références aux figures 4 à 6.

Conformément à la présente invention, une trajectoire de référence est définie comme une trajectoire médiane par rapport aux contours, comportant des points équidistants par rapport à des points du contour géométrique de la section, calculée par application d'un algorithme de Voronoï ou de Delaunay. En particulier, la méthode de Delaunay comporte une triangulation, les triangles ayant leurs sommets sur le contour géométrique de la section, les points de sommets étant sélectionnés, de manière connue, en fonction d'une représentation linéaire par morceaux du contour. Une trajectoire de référence est définie par l'ensemble de points passant par les points milieu des côtés des triangles de Delaunay. Ainsi, les points de la trajectoire tracée sont équidistants de points sélectionnés du contour. Dans ce premier mode de mise en oeuvre, la trajectoire de référence est un squelette représentatif du contour géométrique de la section.

Selon un deuxième mode de réalisation, qui ne fait pas partie de la présente invention, c'est le contour géométrique de la section bidimensionnelle à traiter qui définit la trajectoire de référence. En d'autres termes, la trajectoire de référence est obtenue directement à partir du contour géométrique de la section. Dans ce deuxième mode de réalisation, la trajectoire de référence est une courbe fermée.

Comme on peut le constater, selon ces deux modes de réalisation, la trajectoire de référence est une trajectoire dont la forme est corrélée à la forme du contour géométrique de la section et qui est donc adaptée spécifiquement à la section traitée, et c'est une trajectoire de forme géométrique quelconque. Dans le premier mode de réalisation, la forme de la trajectoire de référence est déduite du contour géométrique de la section par calcul analytique, et elle est corrélée à la forme du contour car c'est un « squelette » obtenu à partir du contour. Dans le deuxième mode de réalisation, qui ne fait pas partie de la présente invention, la forme de la trajectoire de référence est identique à la forme géométrique du contour.

Un ensemble de trajectoires à parcourir par le faisceau laser est déterminé à partir de la trajectoire de référence à l'étape 54 qui est mise en oeuvre après l'étape 52. Cet ensemble comprend des trajectoires distantes d'une distance Ev prédéterminée, la distance Ev étant pré-calculée en fonction de la structure de l'objet à fabriquer et des propriétés physiques des matériaux utilisés. Par exemple, la distance Ev est comprise dans une plage de 10 $\mu$m à 150 $\mu$m.

L'ensemble des trajectoires comprend la trajectoire de référence. Le nombre des trajectoires est dépendant donc de la distance Ev entre deux trajectoires successives et de la forme géométrique du contour, comme on le verra sur des exemples illustrés ci-après.

Une fois l'ensemble des trajectoires à parcourir déterminé, une stratégie de parcours est déterminée à l'étape 56. Une stratégie de parcours inclut l'ordre de parcours des trajectoires de l'ensemble de trajectoires pour le lasage, ainsi que le point de début de parcours de chaque trajectoire, le point de fin étant implicitement connu connaissant la trajectoire et le contour géométrique de la section. En supplément, la stratégie de parcours peut également définir un mode de parcours, par exemple soit selon un sens de parcours donné, soit en alternant deux sens de parcours entre deux trajectoires successives, ou selon un autre mode d'alternance. La stratégie de parcours peut être définie de manière automatique, selon par exemple un critère de minimisation de la distance entre le point de fin d'une trajectoire et le point de début de la trajectoire suivante dans l'ordre de parcours, de manière à optimiser encore la productivité en réduisant les temps de transition. Alternativement, la stratégie de parcours est définie par un opérateur.

Après avoir obtenu l'ensemble des trajectoires et la stratégie de parcours associée, le procédé comporte une étape 58 de pilotage du faisceau laser, par exemple par envoi d'ordre de commande aux moteurs galvanométriques des moyens 38 de déviation du faisceau laser dans le plan XY. Une numérisation de très faible pas des trajectoires obtenues permet un guidage très précis des moyens 38 de déviation de faisceau laser, permettant d'obtenir des trajectoires de forme géométrique quelconque très précises.

Les figures 4 à 6 illustrent des exemples de section en vue du dessus selon le premier mode de réalisation de l'invention, dans lequel la trajectoire de référence est une trajectoire médiane.

La figure 4 illustre en vue de dessus une section bidimensionnelle 60 d'un objet à fabriquer, ayant un contour géométrique 62. La trajectoire de référence 64 est obtenue par application de la méthode de Delaunay décrite ci-dessus pour obtenir une squelettisation par calcul analytique. Les points de la trajectoire de référence 64 sont situés à égale distance des points de contour selon une direction donnée, comme illustré sur la figure où la trajectoire de référence 64 constituée de points.

La même section 60 est représentée à la figure 5, avec la trajectoire de référence $T_R$ telle qu'illustrée à la figure 4, ainsi que l'ensemble de trajectoires déterminé à partir de la trajectoire de référence.

Chaque trajectoire est calculée à partir de la trajectoire de référence $T_R$, et elle est située à l'intérieur du contour géométrique de la section 62 et à une distance multiple de Ev de la trajectoire de référence $T_R$. Comme expliqué ci-dessus, Ev est un paramètre donné, et la distance Ev entre deux trajectoires successives est constante pour une section bidimensionnelle donnée. Etant données deux trajectoires successives notées $T_i$ et $T_{i+1}$, chaque point de la trajectoire $T_{i+1}$ est à distance Ev (ou offset) sur la normale à ce point d'un point de la trajectoire $T_i$ de façon générale. Dans le cas d'une trajectoire $T_i$ discontinue, c'est à dire, qu'il existe deux tangentes distinctes pour un même point (point d'inflexion), ce point constitue le centre de rotation des normales de longueur Ev, permettant de créer une continuité sur la trajectoire $T_{i+1}$.

Selon un mode de réalisation alternatif, deux trajectoires successives d'une section bidimensionnelle sont à distance Evi constante, mais la distance Evi peut varier à l'intérieur d'une section bidimensionnelle donnée, par exemple la distance entre la trajectoire de référence et première trajectoire suivante est Ev1, puis la distance entre la première trajectoire suivante et la deuxième est Ev2 et ainsi de suite.

L'ensemble des contraintes induit le fait que certaines trajectoires sont morcelées, de manière à être contenues à l'intérieur du contour. Ainsi, les trajectoires 66, 68 et 70 sont à égale distance de la trajectoire de référence $T_R$.

La figure 5 illustre un ordre de parcours préférentiel des trajectoires, qui est indiqué par l'ordre croissant des numéros de référence. Ainsi, l'ordre de parcours sera 66, 68, 70 etc jusqu'à 86, avec un sens de parcours alterné : arrivé sur un point du contour géométrique 62, le sens de parcours est inversé, afin de diminuer la distance entre un point de fin de parcours d'une trajectoire et le point de début de la trajectoire suivante.

En variante, d'autres alternatives pour l'ordre de parcours des trajectoires, et de mode de parcours (sens unique ou sens alterné) sont envisagées.

Par exemple, l'ordre de parcours selon l'ordre décroissant des numéros de référence associés aux trajectoires est équivalent au parcours dans l'ordre croissant des numéros de référence.

Un parcours en sens unique des trajectoires est légèrement sous-optimal en termes de minimisation des temps d'arrêt et de repositionnement.

Selon une autre variante, l'ordre suivant de parcours est envisagé : 76, 74, 72, 70, 68, 66, puis 78, 80, 86, 84, 82.

Néanmoins, il est à noter qu'un faible nombre de trajectoires de lasage est suffisant pour parcourir l'ensemble de la section considérée, ce qui représente un gain en productivité par rapport à la technique connue de lasage par trajectoires rectilignes.

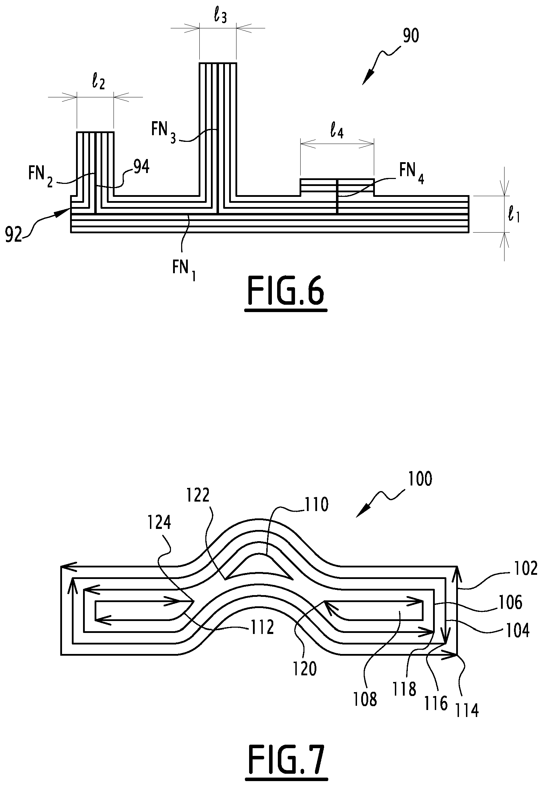

La figure 6 illustre une variante de mise en oeuvre selon le premier mode de réalisation de l'invention, dans le cas particulier d'une section bidimensionnelle ayant plusieurs zones ou portions. Dans le cas particulier illustré à la figure 6, la section 90 à traiter est formée de plusieurs zones rectangulaires définies par le contour géométrique 92, et par leur largeur respective notée $l_i$. On distingue quatre zones, qu'on appellera zone 1 à zone 4. La trajectoire de référence médiane 94 est formée, dans cet exemple, d'une pluralité de portions linéaires. De manière plus générale, la trajectoire de référence est composée de plusieurs segments, chaque segment correspondant à une des zones. Chaque segment de la trajectoire de référence a une longueur associée, notée $L_i$. On peut distinguer dans cet exemple quatre segments de longueurs respectives $L_1$, $L_2$, $L_3$ et $L_4$.

Bien évidemment, le nombre de segments est donné pour l'exemple, la méthode décrite s'appliquant quelque soit le nombre de portions linéaires déterminé en fonction des contours.

Selon une variante de mise en oeuvre, les trajectoires sont calculées, dans chaque zone de la section bidimensionnelle, en fonction de la trajectoire de référence, selon la méthode suivante.

On note FNi le segment, qui est une portion linéaire dans cet exemple, de la trajectoire médiane dans la zone numéro i, de largeur $l_i$. Le segment FNi a une longueur $L_i$.

On désigne par $Xti_P$ le nombre de trajectoires parallèles au segment FNi, et par $Xti_O$ le nombre de trajectoires orthogonales au segment FNi. La distance entre deux trajectoires consécutives est prédéterminée et égale à Ev.

Les nombres respectifs $Xti_P$ et $Xti_O$ sont calculés par les formules suivantes :

$$Xti_P = \frac{l_i}{Ev} \text{ et } Xti_O = \frac{L_i}{Ev}$$

On sélectionne, pour la zone numéro i, des trajectoires parallèles au segment FNi si $Xti_P$ est inférieur à $Xti_O$ (donc si la longueur du segment $L_i$ est supérieure à la largeur $l_i$ de la zone) et vice versa, on sélectionne des trajectoires orthogonales à FNi si $Xti_O$ est inférieur à $Xti_P$, afin de minimiser le nombre global de trajectoires.

Une mise en application de cette méthode de détermination des trajectoires à partir de la trajectoire de référence est illustrée à la figure 6. On constate sur la figure 6 que dans les zones 2 et 3, des trajectoires parallèles au segment de la trajectoire de référence ont été sélectionnées, alors que dans la zone 4, des trajectoires orthogonales au segment FN4 ont été sélectionnées.

Grâce à cette méthode de sélection des trajectoires en fonction de la trajectoire de référence, le nombre total de trajectoires est minimisé, ce qui permet d'optimiser la productivité.

La figure 7 illustre un deuxième mode d'obtention de trajectoire de référence qui ne fait pas partie de l'invention, et de l'ensemble des trajectoires associées.

De manière analogue à la figure 4, la figure 7 illustre, en vue de dessus, une section bidimensionnelle 100 d'un objet à fabriquer, ayant un contour géométrique 102.

Dans ce mode de réalisation, le contour géométrique 102 est la trajectoire de référence. Les autres trajectoires de l'ensemble des trajectoires, notées 104 à 112, est déterminé par transformation géométrique à partir de la trajectoire de référence 102, selon la distance Ev entre deux trajectoires successives. En effet, comme dans le premier mode de réalisation, un offset de Ev est appliqué entre deux trajectoires successives notées $T_i$ et $T_{i+1}$ : chaque point de la trajectoire $T_{i+1}$ est à distance Ev (ou offset) sur la normale à ce point d'un point de la trajectoire $T_i$.

Comme dans le premier mode de réalisation, certaines trajectoires sont décomposées en plusieurs sous-trajectoires qui sont toutes à une même distance multiple de Ev de la trajectoire de référence, comme par exemple les trajectoires 108, 110 et 112. Les trajectoires tracées à partir de la trajectoire de référence sont imbriquées.

Un ordre de parcours de l'extérieur vers l'intérieur, dans l'ordre croissant des numéros de référence associés aux trajectoires est envisagé.

En alternative, les trajectoires sont parcourues de l'intérieur vers l'extérieur, dans l'ordre décroissant des numéros de référence dans cet exemple.

Les trajectoires étant des courbes fermées, pour chaque trajectoire, le point de fin du parcours est le même que le point de début de parcours.

Ainsi, n'importe quel point d'une trajectoire peut être choisi comme point de début de parcours.

Par exemple, un ensemble de points de début de parcours sont indiqués sur la figure 7, numérotés 114 à 124 pour l'ensemble des trajectoires prévues. Comme dans le premier mode de réalisation, il peut être envisagé soit de parcourir toutes les trajectoires dans le même sens (par exemple, le sens des aiguilles d'une montre), soit d'alterner les sens de parcours selon une règle d'alternance donnée.

Cependant, l'alternance des sens de parcours est moins pertinente que dans le premier mode de réalisation pour diminuer les temps de transition. Néanmoins, selon les cas d'application, l'alternance des sens de parcours est appliquée, notamment afin d'améliorer l'homogénéité de la température au cours du traitement de la section.

Avantageusement, dans ce deuxième mode de réalisation le nombre de trajectoires nécessaires pour traiter la section, en appliquant la distance prédéterminée Ev entre deux trajectoires, est encore diminué, ce qui permet d'encore de diminuer les temps de transition et d'augmenter la productivité.

Deux modes de réalisation de la détermination de la trajectoire de référence ont été explicités. Il est à noter que la sélection entre ces modes peut se faire en fonction de la forme du contour géométrique de la section bidimensionnelle à traiter, de manière à favoriser la productivité et la qualité de surface obtenue. Avantageusement, grâce cette mise en oeuvre, tout type de forme géométrique de contour peut être traitée pour effectuer un pilotage de faisceau laser.

L'invention n'est pas limitée aux exemples décrits et représentés.

Ainsi, il est envisageable par exemple d'associer un numéro à chaque section bidimensionnelle traitée et d'alterner entre les deux modes de réalisation décrits ci-dessus, avec diverses stratégies de parcours associées, en fonction du numéro de la section bidimensionnelle, ou de tout autre paramètre.

**Revendications**

1. Procédé de pilotage de faisceau laser pour fabrication d'objets tridimensionnels par couches superposées, comportant, pour chaque couche, une étape de solidification par faisceau laser d'une zone correspondant à une section bidimensionnelle d'un objet tridimensionnel à fabriquer, une dite section bidimensionnelle ayant un contour géométrique, comportant, pour au moins une dite section bidimensionnelle, les étapes de :

   - acquisition (50) du contour géométrique (62, 92, 102) de ladite section bidimensionnelle,
   - détermination (52) d'une trajectoire de référence (64, 94, 102) à partir dudit contour géométrique de la section, ladite trajectoire de référence ayant une forme corrélée à la forme dudit contour géométrique,
   - détermination (54) par calcul d'un ensemble de trajectoires en fonction de ladite trajectoire de référence, et
   - pilotage (58) du faisceau laser pour parcourir l'ensemble des trajectoires déterminées selon une stratégie de parcours définissant un ordre de parcours des trajectoires et un point de début de parcours pour chaque trajectoire,

   l'ensemble de trajectoires déterminé comprenant la trajectoire de référence, **caractérisé en ce que** la trajectoire de référence est une trajectoire médiane obtenue à partir d'un ensemble de points équidistants par rapport à des points sélectionnés sur ledit contour géométrique.

2. Procédé selon la revendication 1, **caractérisé en ce que** la détermination (54) d'un ensemble de trajectoires comprend la génération d'une pluralité de trajectoires parallèles à la trajectoire de référence, deux trajectoires successives étant distantes d'une distance prédéterminée.

**3.** Procédé selon l'une des revendications 1 ou 2, **caractérisé en ce que** la détermination (54) d'un ensemble de trajectoires comprend, pour une zone de ladite section bidimensionnelle ayant un segment (FN1, FN2, FN3, FN4) de la trajectoire de référence (94) correspondant, une sélection entre trajectoires parallèles et trajectoires orthogonales audit segment de la trajectoire de référence en fonction d'un critère prédéterminé.

**4.** Procédé selon l'une quelconque des revendications précédentes, **caractérisé en ce qu'**il comprend en outre une étape de détermination (56) de ladite stratégie de parcours, permettant de minimiser la distance entre un point de fin de parcours d'une trajectoire et un point de début de parcours d'une trajectoire suivante selon l'ordre de parcours.

**5.** Procédé selon l'une quelconque des revendications précédentes, **caractérisé en ce que** ladite stratégie de parcours comprend également la définition d'un mode de parcours pour chaque trajectoire de l'ensemble des trajectoires, parmi un parcours dans un sens prédéterminé et une alternance entre deux sens de parcours prédéterminés.

**6.** Dispositif de fabrication d'objets tridimensionnels par couches superposées, apte à appliquer, pour chaque couche à fabriquer, une solidification par faisceau laser d'une zone correspondant à une section bidimensionnelle d'un objet tridimensionnel à fabriquer, une dite section bidimensionnelle ayant un contour géométrique, comportant des moyens (38) de déviation d'un faisceau laser, comportant :

- des moyens d'acquisition du contour géométrique de ladite section bidimensionnelle,
- des moyens de détermination d'une trajectoire de référence à partir dudit contour géométrique de la section, ladite trajectoire de référence ayant une forme corrélée à la forme dudit contour géométrique,
- des moyens de détermination par calcul d'un ensemble de trajectoires en fonction de ladite trajectoire de référence, et
- des moyens de pilotage desdits moyens de déviation du faisceau laser, aptes à piloter ledit faisceau laser pour parcourir l'ensemble des trajectoires déterminées selon une stratégie de parcours définissant un ordre de parcours et un point de début de parcours pour chaque trajectoire,

l'ensemble de trajectoires déterminé comprenant la trajectoire de référence, **caractérisé en ce que** ladite trajectoire de référence (64, 94) est une trajectoire médiane obtenue par lesdits moyens de détermination d'une trajectoire de référence à partir d'un ensemble de points équidistants par rapport à des points sélectionnés sur ledit contour géométrique.

**7.** Dispositif selon la revendication 6, **caractérisé en ce qu'**il comporte une unité de calcul (24) apte à mettre en oeuvre lesdits moyens d'acquisition de contour géométrique, lesdits moyens de détermination d'une trajectoire de référence et lesdits moyens de détermination de l'ensemble des trajectoires.

**Patentansprüche**

**1.** Verfahren zum Steuern eines Laserstrahls für die Herstellung von dreidimensionalen Objekten durch übereinanderliegende Schichten, das für jede Schicht einen Verfestigungsschritt einer Zone entsprechend einem zweidimensionalen Querschnitt eines dreidimensionalen herzustellenden Objektes durch den Laserstrahl aufweist, wobei ein genannter zweidimensionaler Querschnitt, der eine geometrische Kontur aufweist, für mindestens einen genannten zweidimensionalen Querschnitt die Schritte aufweist:

- Beschaffen (50) der geometrischen Kontur (62, 92, 102) des zweidimensionalen Querschnitts,
- Bestimmen (52) einer Referenztrajektorie (64, 94, 102) aus der geometrischen Kontur des Querschnitts, wobei die Referenztrajektorie eine zu der Form der geometrischen Kontur korrelierende Form aufweist,
- Bestimmen (54) einer Gesamtheit von Trajektorien abhängig von der Referenztrajektorie durch Berechnung und
- Steuern (58) des Laserstrahls zum Durchlaufen der Gesamtheit der bestimmten Trajektorien gemäß einer Durchlaufstrategie, die eine Reihenfolge des Durchlaufs der Trajektorie und einen Anfangspunkt des Durchlaufs für jede Trajektorie definiert,

wobei die bestimmte Gesamtheit der Trajektorien die Referenztrajektorie umfasst, **dadurch gekennzeichnet, dass** die Referenztrajektorie eine mittlere Trajektorie ist, die aus einer Gesamtheit von in Bezug auf ausgewählte Punkten auf der geometrischen Kontur gleichabständigen Punkten erhalten wird.

**2.** Verfahren nach Anspruch 1, **dadurch gekennzeichnet, dass** das Bestimmen (54) einer Gesamtheit von Trajektorien die Erzeugung einer Mehrzahl von zur Referenztrajektorie parallelen Trajektorien umfasst, wobei zwei aufeinanderfolgende Trajektorien durch einen vorbestimmten Abstand beabstandet sind.

**3.** Verfahren nach einem der Ansprüche 1 oder 2, **da-**

**durch gekennzeichnet, dass** das Bestimmen (54) einer Gesamtheit von Trajektorien für eine Zone des zweidimensionalen Querschnitts, die ein entsprechendes Segment (FN1, FN2, SN3, FN4) der Referenztrajektorie (94) aufweist, eine Auswahl zwischen zu dem Segment der Referenztrajektorie parallelen und orthogonalen Trajektorien abhängig von einem vorbestimmten Kriterium umfasst.

4. Verfahren nach einem beliebigen der vorhergehenden Ansprüche, **dadurch gekennzeichnet, dass** es außerdem einen Schritt des Bestimmens (56) der Durchlaufstrategie, der eine Minimierung des Abstandes zwischen einem Endpunkt des Durchlaufs einer Trajektorie und einem Anfangspunkt des Durchlaufs einer Trajektorie, die gemäß der Reihenfolge des Durchlaufs folgt, gestattet.

5. Verfahren nach einem beliebigen der vorhergehenden Ansprüche, **dadurch gekennzeichnet, dass** die Durchlaufstrategie gleichfalls die Definition einer Art des Durchlaufs für jede Trajektorie der Gesamtheit der Trajektorie aus einem Durchlauf in eine vorbestimmte Richtung und einem Wechsel zwischen zwei Richtungen des vorbestimmten Durchlaufs umfasst.

6. Vorrichtung zum Herstellen von dreidimensionalen Objekten durch übereinanderliegende Schichten, die geeignet ist, für jede herzustellende Schicht eine Verfestigung einer einem zweidimensionalen Querschnitt eines herzustellenden dreidimensionalen Objektes entsprechende Zone durch einen Laserstrahl aufzubringen, wobei ein genannter Querschnitt eine geometrische Kontur aufweist, wobei Mittel (38) zur Ablenkung eines Laserstrahls vorgesehen sind, umfassend:

    - Mittel zum Beschaffen (50) der geometrischen Kontur (62, 92, 102) des zweidimensionalen Querschnitts,
    - Mittel zum Bestimmen (52) einer Referenztrajektorie (64, 94, 102) aus der geometrischen Kontur des Querschnitts, wobei die Referenztrajektorie eine zu der Form der geometrischen Kontur korrelierende Form aufweist,
    - Mittel zum Bestimmen (54) einer Gesamtheit von Trajektorien abhängig von der Referenztrajektorie durch Berechnung und
    - Mittel zum Steuern (58) der Mittel zum Ablenken des Laserstrahls zum Durchlaufen der Gesamtheit der bestimmten Trajektorien gemäß einer Durchlaufstrategie, die eine Reihenfolge des Durchlaufs der Trajektorie und einen Anfangspunkt des Durchlaufs für jede Trajektorie definiert,

    wobei die bestimmte Gesamtheit der Trajektorien die Referenztrajektorie umfasst, **dadurch gekennzeichnet, dass** die Referenztrajektorie (64, 94) eine mittlere Trajektorie ist, die von den Mitteln zum Bestimmen einer Referenztrajektorie aus einer Gesamtheit von in Bezug auf ausgewählte Punkten auf der geometrischen Kontur gleichabständigen Punkten erhalten wird.

7. Vorrichtung nach Anspruch 6, **dadurch gekennzeichnet, dass** sie eine Recheneinheit (24) aufweist, die geeignet ist, die Mittel zum Beschaffen der geometrischen Kontur, die Mittel zum Bestimmen einer Referenztrajektorie und die Mittel zum Bestimmen der Gesamtheit der Trajektorien zu realisieren.

**Claims**

1. A method for controlling a laser beam for manufacturing three-dimensional objects by means of stacked layers, comprising, for each layer, a step for using a laser beam to solidify a zone corresponding to a two-dimensional object to be manufactured, such a two-dimensional section having a geometric contour, comprising, for at least one said two-dimensional section, the following steps:

    - acquiring (50) the geometric contour (62, 92, 102) of said two-dimensional section,
    - determining (52) a reference path (64, 94, 102) from said geometric contour of the section, said reference path having a shape correlated to the shape of said geometric contour,
    - determining (54) by computation a set of paths based on said reference path, and
    - controlling (58) the laser beam to travel all of the determined paths using a travel strategy defining a travel order of the paths and a starting point for each path, the determined set of paths comprising the reference path, **characterized in that** the reference path is a median path obtained from a set of points that are equidistant from points selected on said geometric contour.

2. The method according to claim 1, **characterized in that** the determination (54) of a set of paths includes generating a plurality of paths parallel to the reference path, two successive paths being separated by a predetermined distance.

3. The method according to one of claims 1 or 2, **characterized in that** the determination (54) of a set of paths includes, for a zone of said two-dimensional section having a corresponding segment (FN1, FN2, FN3, FN4) of the reference path (94), choosing between paths parallel and orthogonal to said segment of the reference path based on a predetermined criterion.

4. The method according to any one of the preceding claims, **characterized in that** it further includes a step for determining (56) said travel strategy, making it possible to minimize the distance between an end-of-travel point of a path and a beginning-of-travel point of a next path in the travel order.

5. The method according to any one of the preceding claims, **characterized in that** said travel strategy also includes defining a travel mode for each path from the set of paths, from among a path in one predetermined position and alternating between two predetermined travel directions.

6. A device for manufacturing three-dimensional objects by means of stacked layers, able to apply, for each layer to be manufactured, laser beam solidification of a zone corresponding to a two-dimensional section of a three-dimensional object to be manufactured, one said two-dimensional section having a geometric contour, comprising means (38) for deflecting a laser beam, comprising:

> - means for acquiring the geometric contour of said two-dimensional section,
> - means for determining by computation a reference path from said geometric contour of the section, said reference path having a shape correlated to the shape of said geometric contour,
> - means for determining a set of paths based on said reference path, and
> - means for controlling said means for deflecting the laser beam, able to control said laser beam to move over all of the determined paths following a travel strategy defining a travel order and a travel starting point for each path, the determined set of paths comprising the reference path, **characterized in that** said reference path (64, 94) is a median path obtained by said determining means from a set of points that are equidistant from points selected on said geometric contour.

7. The device according to claim 6, **characterized in that** it comprises a computation unit (24) able to implement said geometric contour acquisition means, said reference path determining means and said means for determining the set of paths.

## FIG.1

## FIG.2

Section S

|
v

Acquisition
contour                50

|
v

Détermination
trajectoire          52
de références

|
v

Détermination
ensemble des         54
trajectoires

|
v

Détermination
stratégie de         56
parcours

|
v

Pilotage             58
faisceau laser

FIG.3

60

64

62

## FIG.4

68

66

70

60

72

74

76

78

80

$T_R$

84

82

62

86

## FIG.5

## FIG.6

## FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2378150 A1
- DE 10112591 A1
- DE 102011105045 B3